# EUROPEAN PATENT SPECIFICATION

(11) **EP 3 008 734 B1**
(45) Date of publication and mention of the grant of the patent: **18.10.2017**
(21) Application number: 14706968.6
(22) Date of filing: 14.01.2014
(51) Int. Cl.: G21K 4/00, C09K 11/77, G01T 1/202

(54) **X-RAY MEMORY AS WELL AS ITS USE**
RÖNTGENSPEICHER UND DESSEN VERWENDUNG
MÉMOIRE À RAYONS X AINSI QUE SON UTILISATION

(30) Priority: 12.06.2013 PL 40430413
(43) Date of publication of application: 20.04.2016
(73) Proprietor: Wroclawskie Centrum Badan EIT + Sp. z o.o., 54-066 Wroclaw (PL)
(72) Inventor: WIATROWSKA, Aneta, PL-54-142 Wroclaw (PL); ZYCH, Eugeniusz, PL-50-302 Wroclaw (PL); BOLEK, Paulina, PL-63-714 Kobierno (PL)
(74) Representative: Witek, Rafal
(86) International application number: PCT/PL2014/050001
(87) International publication number: WO 2014/200372

(56) References cited:
- WO-A2-2012/099481

## Description

The subject of the present invention is an X-ray memory containing a lutetium trioxide Lu₂O₃ matrix doped with praseodymium and niobium, or preaseodymium and titanium as well as its use.

The number of known luminophores characterised by an ability to permanently store incident energy from the exposure to high-energy ultraviolet rays or X-rays is very limited. From among known X-ray storage phosphors, medicine makes use solely of BaFBr:Eu²⁺, and in recent years also CsBr:Eu²⁺ in the form of tightly bound, monocrystalline needles forming a plate have found many uses and are currently perceived as the best material of this type to be discovered. In 1980. Fuji Photo Film (Tokyo, Japan) patented a process using various photostimulated luminophores, including BaFX:Eu²⁺ (X=Cl, Br), to record the intensity of X-ray irradiation incident upon a layer of such material(N. Kotera, S. Eguchi, J. Miyahara, S. Matsumoto, and H. Kato, US patents: US4236078 as well as US4239968). In 1983, a method of obtaining a computer image of a radiological image using a BaFBr:Eu²⁺ X-ray memory was described. This luminophore remains the most studied and ameliorated luminophore of this type to date (M. Sonoda, M. Takano, J. Miyahara, and H. Kato, Radiology 148 (1983) 833-838.). A great drawback of CsBr:Eu²⁺ plates is the fact that they are hydroscopic, which greatly complicates their production and creates the risk of irreversible property loss if the protective layer is damaged. In the case of both X-ray memory, BaFX:Eu²⁺ (X=Cl,Br) as well as CsBr:Eu²⁺, an imaging drawback consists of their low density, 4.96 g/cm³ and 4.44 g/cm³ respectively, which translates to decreased efficacy in X-ray photon entrapment, and by the same token necessitates the use of thicker layers, which increases the cost and decreases the quality of images, in particular their resolution.

The possibility of using transparent plates of luminescent materials based on Lu₂O₃ doped with europium (Eu) or terbium (Tb) was described in, amongst others, A. Lempicki et al. Nucl. Instr. Meth A 488 (2002) 579-590. Information regarding the luminescence of Lu₂O₃:Pr was described in C. De Mello Donega and in., J. Phys. Chem. Solids 56 (1995) 673-685. Neither of these studies described the possibility of storing energy in materials based on Lu₂O₃:Pr.

Patent description WO2012099481 discloses the possibility of storing excitation energy in energy traps as reported for Lu₂O₃:Pr, Hf. It was shown that Lu₂O₃:Pr, Hf ceramics gather energy in traps of various depths and for this reason this energy may be released by stimulation with electromagnetic radiation of varying energy, with infrared to violet photons. For this reason, it becomes necessary to use expensive filters to separate the emitted light (mainly 600-650 nm) from the dispersed stimulating radiation. The drawback of all powdered X-ray memory is their strong dispersion of light on the luminophore grains. This causes the strong diffusion of medical images, one of the most important practical uses of this type of material. For this reason, attempts are being made to produce an X-ray memory in the form of transparent plates. To achieve this in a glass matrix, crystalline grains of X-ray memory of the smallest possible size are dispersed so as to further limit the dispersal effects as described in S. Schweizer, J. A. Johnson, Radiation Measurements 42 (2007) 632 - 637. Although the resolution of images using such X-ray memory is indeed markedly better, the presence of glass (inactive in emission but absorbent to X-rays) entails an increase of the ionizing radiation dose, and this decreases the usibility of such a solution in medical diagnostics. The main advantage, after all, of using X-ray memory in medical imaging is the marked reduction of the necessary X-ray dose, which makes the technique safer for the patient. For this reason, there is still a need to deliver a luminescent material of great density, which will resolve the above technical problems, and in which optically stimulated luminescence will only be generated by a light of higher energy than that emitted by the luminophore, wherein the spectral difference will be sufficiently large that imaging will be able to make use of less complicated, and by the same token less expensive optical band filters, wherein the material may be made in the form of a transparent, optically isotropic sintered body, which will be characterised by a high resolution and contrast of the recorded image during information retrieval, and furthermore such a material will not be degraded by environmental factors, and the X-ray memory built based on the luminescent material will be more efficacious in the absorption of incident X-rays and will be capable of accumulating large quantities of energy in energy traps with a high temporal stability due to their large energetic depth. Unexpectedly, the aforementioned problems have been solved by the present invention.

The first subject of the present invention is an X-ray memory characterised in that it contains a matrix of lutetium trioxide Lu₂O₃ doped with praseodymium and niobium or titanium. Preferably, in the next embodiment of the present invention the content of praseodymium, in atomic percent in relation to lutetium, is from 0.01% to 0.2%. Equally preferably in the next embodiment the present invention the content of niobium, in atomic percent in relation to lutetium, is from 0.01% to 0.5%. More preferably content of titatanium, in atomic percent in relation to lutetium, is from 0.007% to 0.1 %. In the next preferable embodiment of the present invention, the material illuminated with X stably accumulates the acquired energy. In the next preferable embodiment of the present invention, the energy accumulated in the luminescent material may be released in the form of red photons of emitted light due to heating to a temperature of about 350-450°C. Preferably, the energy accumulated by the luminescent material can be released in the form of a red light emission as a result of optical stimulation with photons of radiation with a wavelength of about 400 nm.

The second subject of the present invention is the use of a memory defined and disclosed in the first subject of the present invention in the securing of confidential documents and/or in the production of X-ray memory for medical diagnostics, in the manufacturing of a visible radiation source, in the manufacturing of infrared laser radiation indicators or for dosimetry.

The biggest advantage of the present invention is the fact that this luminophore has the greatest density of currently used X-ray memories, and by the same token most effectively absorbs X-rays. This means, that even when used in the form of a thin layer, it is capable of absorbing a greater fraction of incident X rays than another X-ray memory. This, in turn, yields the possibility of obtaining a higher light intensity during the heating or stimulation of the material with radiation with a wavelength of about 400 nm. Another important advantage of the presented X-ray memory is the fact that this material may be produced in the form of not only a powder or a simple sintered body, but also as a transparent sintered ceramics, which is due to the fact that this is an optically isotropic material, because it crystallizes in a regular crystallographic system. This is a sufficient condition for the manufacturing of transparent sintered ceramics. For this reason, light dispersion does not occur during information retrieval using stimulation with radiation with a wavelength of about 400nm. During use in medical diagnostics and all other imaging uses, this directly translates to increased resolution and contrast, the two most significant parameters that decide about the quality and utility of a medical image. The observed light emission from the luminophore that is the subject of the present invention is connected with the radiative relaxation of the excited Pr³⁺ ion. The emitted light is red, which is effectively captured by a series of electronic detectors - photoamplifiers, in particular photodiodes and CCD cameras. An important advantage of the presented material is also the fact that the properties of Lu₂O₃ do not degrade under environmental conditions such as moisture, carbon dioxide or other airborne gasses. For this reason it can be used without the need for special protection against external conditions. Materials capable of the long-term storage of energy obtained from the absorption of shortwave radiation, such as ultraviolet, can be used as X-ray detectors in digital medical diagnostics (digital imaging), in which the image is "developed" through the stimulation of the previously X-ray exposed material, the so-called X-ray memory, with low energy infrared radiation or long-wave red radiation. These materials can also be used for securing sensitive documents and banknotes. They may also be used as temperature sensors. These materials, previously exposed to ultraviolet or X-ray radiation, may also be used as a source of visible light following heating to higher temperatures or as a result of stimulation with infrared radiation. Fine-grained powders of such luminophores incorporated for example into a polymer matrix can be used as an indicator of infrared laser radiation, which significantly increases the safety of work with infrared lasers. The high density, and thereby the high X-ray absorbance coefficient of Lu₂O₃ as well as the possibility of producing it in the form of a transparent sintered ceramics forces one to indicate medical diagnostics as a main potential use of Lu₂O₃:Pr, Nb and Lu₂O₃:Pr, Ti X-ray memories.

Example embodiments of the present invention are shown in the attached picture, wherein Fig.1 shows the emission spectrum as a result of the X-ray excitation of Lu₂O₃:0.01%Pr;0.01%Nb synthesized at a temperature of 1700°C, in atmospheric air; Fig.2 shows a glow curve for Lu₂O₃:0.01%Pr;0.01%Nb synthesized at a temperature of 1700°C for 5h in atmospheric air recorded following exposure to X-ray radiation. Heating rate: 4.8°C/s; Fig.3 shows the emission spectrum as a result of the X-ray excitation of Lu₂O₃:0.25%Pr;0.25%Nb synthesized at a temperature of 1000°C in atmospheric air; Fig.4 shows a glow curve for Lu₂O₃:0.25%Pr;0.25%Nb synthesized at a temperature of 1000°C for 5h in atmospheric air recorded following exposure to X-ray radiation. Heating rate: 4.8°C/s; Fig.5 shows the emission spectrum as a result of the X-ray excitation of Lu₂O₃:0.25%Pr;0.25%Nb synthesized at a temperature of 1700°C in atmospheric air; Fig.6 shows a deconvolution performed using a 1st order algorithm a glow curve recorded following exposure to ultraviolet radiation at a wavelength of 254 nm for Lu₂O₃:0.25%Pr;0.25%Nb synthesized at a temperature of 1700°C for 5h in atmospheric air. Heating rate: 4.7°C/s; Fig.7 shows a glow curve for Lu₂O₃:0.25%Pr;0.25%Nb synthesized at a temperature of 1700°C for 5h in atmospheric air recorded following exposure to X-ray radiation. Heating rate: 4.8°C/s; Fig.8 shows the emission spectrum as a result of the X-ray excitation of Lu₂O₃:0.05%Pr;0.05%Nb synthesized at a temperature of 1700°C in an atmosphere of 25% H₂ + 75% N₂. Fig.9 shows a thermally stimulated luminescence spectrum for Lu₂O₃:0.05%Pr;0.05%Nb synthesized at a temperature of 1700°C for 5h in an atmosphere of 25% H₂ + 75% N₂ recorded at a temperature of 330°C following a prior exposure to X-ray radiation; Fig.10 shows a glow curve for Lu₂O₃:0.05%Pr;0.05%Nb synthesized at a temperature of 1700°C for 5h in an atmosphere of 25% H₂ + 75% N₂ recorded following exposure to ultraviolet radiation at a wavelength of 254 nm. Heating rate: 4.8°C/s; Fig.11 shows the glow curves for Lu₂O₃:0.05%Pr;0.05%Nb synthesized at a temperature of 1700°C for 5h in an atmosphere of 25% H₂ + 75% N₂ recorded following exposure to ultraviolet radiation at a wavelength of 254 nm (solid line) as well as an additional stimulation with radiation at wavelengths of 980 nm (dotted line), 780 nm (dashed line) and 405 nm (dotted-dashed line). Heating rate: 4.8°C/s; Fig.12 shows The glow curves for Lu₂O₃:0.05%Pr;0.05%Nb synthesized at a temperature of 1700°C for 5h in an atmosphere of 25% H₂ + 75% N₂ recorded immediately following exposure to X-ray radiation (solid line) as well as after waiting 38 days from the irradiation (dotted line). Heating rate: 4.8°C/s; Fig.13 shows The emission spectrum as a result of the X-ray excitation of Lu₂O₃:0.05%Pr;0.05%Nb synthesized at a temperature of 1700°C in in a vacuum; Fig.14 shows a glow curve for Lu₂O₃:0.05%Pr;0.05%Nb synthesized at a temperature of 1700°C for 5h in in a vacuum recorded following exposure to X-ray radiation. Heating rate: 4.8°C/s; Fig.15 shows a glow curve for Lu₂O₃:0.05%Pr;0.05%Nb synthesized at a temperature of 1700°C for 5h in atmospheric air recorded following exposure to X-ray radiation for 8 minutes. Heating rate: 4.8°C/s; Fig.16 shows a glow curve for Lu₂O₃:0.05%Pr;0.05%Nb synthesized at a temperature of 1700°C for 5h in atmospheric air recorded following exposure to ultraviolet radiation at a wavelength of 254 nm for 5 minutes. Heating rate: 4.75°C/s; Fig.17 shows extinction recorded at various temperatures: 300°C, 320°C, 340°C for Lu₂O₃:0.05Pr;0.05%Nb synthesized at a temperature of 1700°C in atmospheric air. The experimental curve may be described well by the equation I - I₀•(1 + γt)⁻ⁿ, where the values of the exponent n and γ change with the measurement temperature and are n = 5,7; 7,5; 8,5 as well as 6×10^{-12.} 1×10^{-14.} 1×10⁻¹⁵, for 300°C, 320°C and 340°C respectively; Fig.18 shows the OSL intensity loss recorded during constant stimulation with radiation at a wavelength of 400 nm, following exposure to X-ray radiation of a Lu₂O₃:0.05%Pr;0.05%Nb ceramic sintered at a temperature of 1700°C in air; Fig.19 shows the emission spectrum as a result of the X-ray excitation of Lu₂O₃:0.05%Pr;0.05%Nb synthesized at a temperature of 1700°C in an atmosphere of N₂. Fig.20 shows a glow curve for Lu₂O₃:0.05%Pr;0.05%Nb synthesized at a temperature of 1700°C for 5h in a nitrogen atmosphere recorded following exposure to X-ray radiation for 5 minutes. Heating rate: 4.8°C/s; Fig.21 shows the emission spectrum recorded using X-ray excitation for Lu₂O₃:0.05%Pr;0.2%Nb synthesized at a temperature of 1700°C in a reducing atmosphere: 25% H₂ + 75% N₂. Fig. 22 shows a glow curve for Lu₂O₃:0.05%Pr;0.2%Nb synthesized at a temperature of 1700°C for 5h in a reducing atmosphere 25% H₂ + 75% N₂ recorded following exposure to X-ray radiation for 5 minutes. Heating rate: 4.8°C/s; Fig.23 shows a glow curve for Lu₂O₃:0.05%Pr;0.2%Nb synthesized at a temperature of 1200°C for 5h in atmospheric air recorded following exposure to UV radiation at a wavelength of 254 nm for 5 minutes. Heating rate: 4.8°C/s; Fig.24 shows the emission spectrum recorded using X-ray excitation for Lu₂O₃:0.05%Pr;0.2%Nb synthesized at a temperature of 1700°C in atmospheric air; Fig.25 shows a glow curve for Lu₂O₃:0.2%Pr;0.1%Nb synthesized at a temperature of 1700°C for 5h in atmospheric air recorded following exposure to X-ray radiation for 5 minutes. Heating rate: 4.8°/s. Fig. 26 shows a luminescence spectrum recorded during the excitation of the Lu₂O₃:0.05%Pr;0.007%Ti synthesized at a temperature of 1700°C in atmospheric air with X-ray radiation. Fig. 27 shows a glow curve of the Lu₂O₃:0.05%Pr;0.007%Ti synthesized at a temperature of 1700 °C in the atmospheric air recorded following exposure to X-ray radiation. Fig. 28 shows a glow curve of the Lu₂O₃:0.05%Pr;0.1%Ti synthesized at a temperature of 1700 °C in a mixture of nitrogen and hydrogen at a volume ratio of 3:1 recorded following exposure to X-ray radiation. Fig. 29 shows a glow curve of the Lu₂O₃:0.1%Pr;0.015%Ti synthesized at a temperature of 1700 °C in a mixture of nitrogen and hydrogen at a volume ratio of 3:1 recorded following exposure to X-ray radiation. Fig. 30 shows a glow curve of the Lu₂O₃:0.05%Pr;0.015%Ti synthesized at a temperature of 1700 °C in a mixture of nitrogen and hydrogen at a volume ratio of 3:1 recorded following exposure to X-ray radiation. Fig. 31 shows three TL glow curves of a prepared in a mixture of nitrogen and hydrogen at a volume ratio of 3:1 ceramic sample of Lu₂O₃:0.05%Pr;0.007%Ti freshly irradiated with X-rays and further stimulated with 980 nm infrared photons and with 405 nm radiation afterwards.

### Example 1

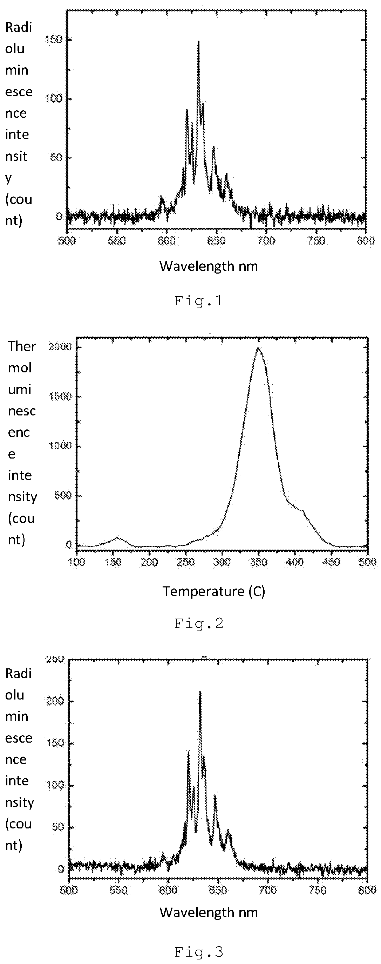

An X-ray memory according to the present invention constituted a matrix with lutetium trioxide Lu₂O₃ activated with an admixture of praseodymium at a concentration of 0.01% counted in relation to lutetium atoms as well as a co-admixture of niobium at a concentration of 0.1% also in relation to lutetium. The above material was produced using the following method: 1.9996 g lutetium nitrate, Lu(NO₃)₃*5H₂O, 0.00019 g praseodymium nitrate, Pr(NO₃)₃*6H₂O, 0.00012g niobium chloride, NbCl₅, 1.3 ml ethylene glycol, C₂H₆O₂ and 13 ml citric acid, C₆H₈O₇ are carefully mixed and heated. The resulting resin was combusted in a furnace at a temperature of 600°C for 5 hours in air. The resulting powder was compacted under a press at high pressure making the end product a ceramic sinter. Next, the material was placed in a furnace and heated at a temperature of about 1700 °C in air. The sample was maintained at that temperature until it cooled to a temperature no greater than 300°C. After cooling, the luminophore was removed from the furnace. The resulting product was a sinter. The resulting luminophore materials were characterised by Pr³⁺ ion emission in the red range of the spectrum with bands in the range 590 - 675 nm, as shown in Figure 1. This is a broad emission band range, such that the sample luminescence has a characteristic red colour, however, its intensity was very low. The emission may be induced using ultraviolet radiation (UV) at a wavelength of in the range of about 200-330 nm, and also X-ray radiation (Figure 1). This emission, however, had a relatively low intensity. Figure 2 shows a glow curve following exposure to ultraviolet radiation at a wavelength of 254 nm, recorded in a temperature range from RT to 500°C. The emission characteristic for Pr³⁺ appeared at particular temperature ranges, but no lower than about 100°C. However,, the strongest luminescence occurred, when the material's temperature reached about 350°C.

### Example 2

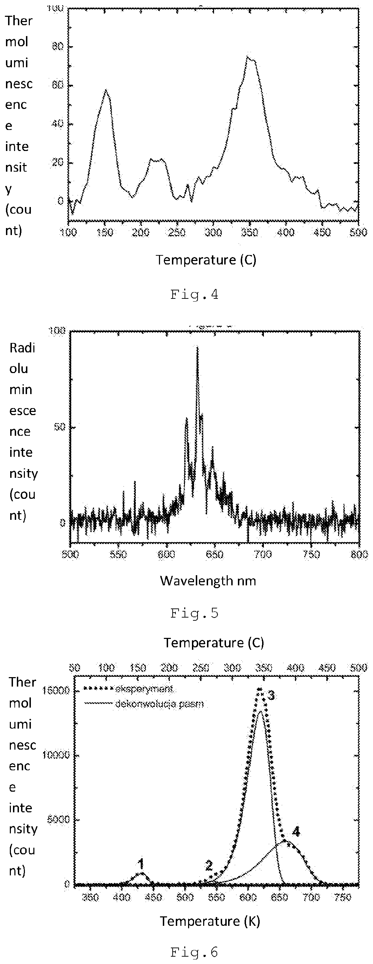

An X-ray memory according to the present invention constitutes a matrix with lutetium trioxide Lu₂O₃ activated with an admixture of praseodymium at a concentration of 0.025% counted in relation to lutetium atoms as well as a co-admixture of niobium at a concentration of 0.025% also in relation to lutetium. The above material was produced using the following method: 1.999 g lutetium nitrate, Lu(NO₃)₃*5H₂O, 0.00048 g praseodymium nitrate, Pr(NO₃)₃*6H₂O, 0.00029g niobium chloride, NbCl₅, 1.3 ml ethylene glycol, C₂H₆O₂ and 13 ml citric acid, C₆H₈O₇ are carefully mixed and heated. The resulting resin was combusted in a furnace at a temperature of 600°C for 5 hours in air. The resulting powder was compacted under a press at high pressure making the end product a ceramic sinter. Next, the material was placed in a furnace and heated at a temperature of about 1000 °C in air. The sample was maintained at that temperature until it cooled to a temperature no greater than 300°C. After cooling, the luminophore was removed from the furnace. The resulting product was a sinter. Figure 3 shows the luminescence spectrum of a ceramic sinter of Lu₂O₃:0.025%Pr;0.025%Nb obtained at a temperature of 1000°C in atmospheric air. The spectrum shows characteristic bands connected with ¹D₂-³H_{4.5} Pr³⁺ transfers in the range 590 - 700 nm as well as 710 - 760 nm, responsible for the generation of the red emission. Figure 4 shows a glow curve recorded following exposure to ultraviolet radiation at a wavelength of 254 nm, recorded in a temperature range from RT to 500°C. The red luminescence characteristic of Pr³⁺ ions appeared at particular temperature ranges, but no lower than about 100°C, wherein the strongest luminescence occurred, when the material's temperature reached about 350°C. It should be stressed, however, that the recorded thermoluminescence was of very low intensity, due to the low sintering temperature of the ceramic: 1000°C.

### Example 3

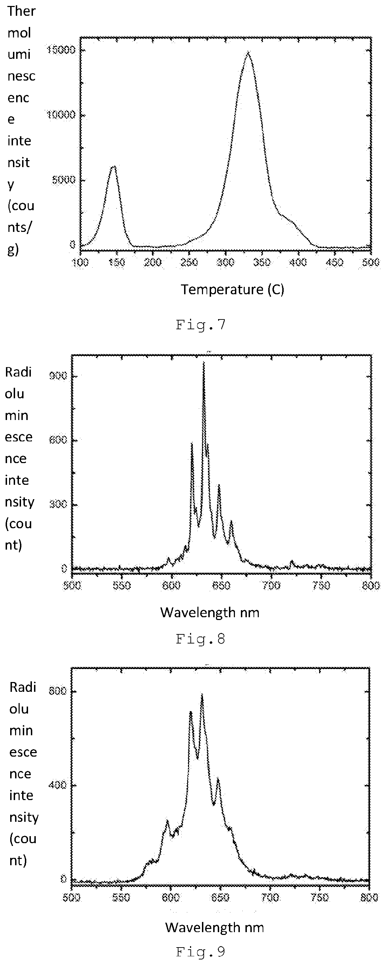

An X-ray memory according to the present invention constituted a matrix with lutetium trioxide Lu₂O₃ activated with an admixture of praseodymium at a concentration of 0.025% counted in relation to lutetium atoms as well as a co-admixture of niobium at a concentration of 0.025% also in relation to lutetium. The above material was produced using the following method: 1.999 g lutetium nitrate, Lu(NO₃)₃*5H₂O, 0.00048 g praseodymium nitrate, Pr(NO₃)₃*6H₂O, 0.00029g niobium chloride, NbCl₅, 1.3 ml ethylene glycol, C₂H₆O₂ and 13 ml citric acid, C₆H₈O₇ are carefully mixed and heated. The resulting resin was combusted in a furnace at a temperature of 600°C for 5 hours in air. The resulting powder was compacted under a press at high pressure making the end product a ceramic sinter. Next, the material was placed in a furnace and heated at a temperature of about 1700 °C in air. The sample was maintained at that temperature until it cooled to a temperature no greater than 300°C. After cooling, the luminophore was removed from the furnace. The resulting product was a sinter. The resulting luminophore materials were characterised by Pr³⁺ ion emission in the red range of the spectrum with bands in the range 590 - 675 nm, as shown in Figure 5. This broad emission band range, gave the sample luminescence a characteristic red hue, however, its intensity was very low. The emission could be induced using ultraviolet radiation (UV) at a wavelength of in the range of about 200-330 nm, and also X-ray radiation (Figure 1). This emission, however, had a low intensity. Figure 6 shows a glow curve following exposure to ultraviolet radiation at a wavelength of 254 nm, recorded in a temperature range from RT to 500°C. The emission characteristic for Pr³⁺ appeared at particular temperature ranges, but no lower than about 100°C. However, the strongest luminescence occurred, when the material's temperature reached about 340°C. Additionally, Figure 2 shows the peak composition of a curve obtained via deconvolution using a 1st order algorithm. For individual peaks, we obtained values of parameters describing energy traps, such as activation energy (trap depth) E as well as s frequency coefficient. These values were, respectively, for peak 1 (157°C) E₁ - 1.45 eV, s₁ = 4×10¹⁶ s^{-1.} for peak 2 (271°C) E₂ = 2.6 eV, s₂ = 6×10²³ s^{-1.} for peak 3 (345°C) E₃ = 1.8 eV, s₃ = 3×10¹⁴ s^{-1.} for peak 4 (385°C) E₄ = 1.2 eV, s₄ = 1×10⁸ s⁻¹. Figure 7 shows a glow curve for the same material recorded following exposure to X-ray radiation. This result differed from that obtained following exposure to ultraviolet radiation solely in the TL peak, with the lowest temperature. Following exposure to X-ray radiation, this peak had a higher intensity. However, in both cases (Figure 2 and 3) analogous processes of energy storage occurred in energy traps, and it was possible to free this energy in the form of the red emission of Pr³⁺ ions as a result of thermal stimulation.

### Example 4

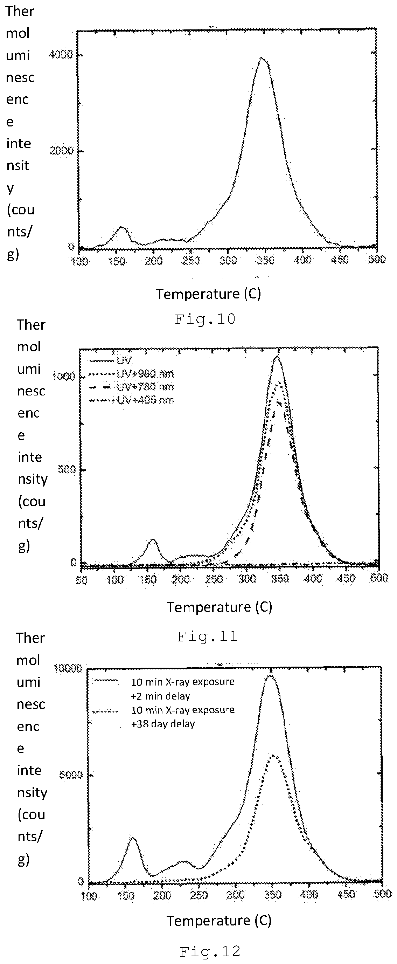

An X-ray memory according to the present invention constituted a matrix with lutetium trioxide Lu₂O₃ activated with an admixture of praseodymium at a concentration of 0.05% counted in relation to lutetium atoms as well as a co-admixture of niobium at a concentration of 0.05% also in relation to lutetium. The above material was produced using the following method: 1.989 g lutetium nitrate, Lu(NO₃)₃*5H₂O, 0.00096 g praseodymium nitrate, Pr(NO₃)₃*6H₂O, 0.0059g niobium chloride, NbCl₅, 1.3 ml ethylene glycol, C₂H₆O₂ and 13 ml citric acid, C₆H₈O₇ are carefully mixed and heated. The resulting resin was combusted in a furnace at a temperature of 600°C for 5 hours in air. The resulting powder was compacted under a press at high pressure making the end product a ceramic sinter. Next, the material was placed in a furnace and heated at a temperature of about 1700°C in a reducing atmosphere, a mixture of nitrogen and hydrogen at a volume ratio of 3:1. The sample was maintained at that temperature until it cooled to a temperature no greater than 300°C. After cooling, the luminophore was removed from the furnace. The resulting product was a sinter. Figure 8 shows the emission spectrum as a result of excitation with X-ray radiation. The resulting spectrum was analogous to spectra obtained for samples shown in Figure 1, with lower concentrations of Pr and Nb synthesized in air. An increase in the concentration of Pr and Nb as well as synthesis in air caused an increase in the emission intensity. Figure 9 shows a glow curve recorded following exposure to X-ray radiation recorded at a temperature of 330°C. The emission maximum occurred at 631.5 nm. However, the intensity ratio of emission bands at 631.5 nm and 622 nm was close to 1:1. In the radioluminescence spectrum recorded at room temperature this ratio was almost 2:1. The increase of the 622 nm band was caused by a higher participation of Pr³⁺ ions in a local C₃ᵢ environment. Figure 10 shows a glow curve following exposure to ultraviolet radiation at a wavelength of 254 nm, recorded in a temperature range from 25 to 500°C. The emission characteristic for Pr3+ appeared at particular temperature ranges: (i) 125 - 175°C, (ii) 175 - 250°C as well as (iii) 250 - 450°C. The most intensive TL band was observed at a temperature of 350 °C. Figure 11 shows the glow curves recorded for Lu₂O₃:Pr(0.05%);Nb(0.05%) synthesized at a temperature of 1700°C in a mixed atmosphere of 25% H₂ + 75% N₂ following a prior exposure to ultraviolet radiation at a wavelength of 254 nm and additionally exposure to radiation at a wavelength of 980 nm, 780 nm as well as 400 nm. Stimulation with radiation at a wavelength of 980 nm caused the depletion solely of traps corresponding to TL bands below 250°C. Above this temperature, we observed only minute decreases of peak intensity. Stimulation with radiation at a wavelength of 780 nm caused a slight decrease of the peak at 340°C. Only stimulation with radiation at a wavelength of 400 nm fully depleted all traps. Figure 12 shows the glow curves following exposure to X-ray radiation, recorded in a temperature range from 25 to 500°C, after 2 minutes, and also after 38 days delay. After 38 days of storage of the irradiated sample in the dark, we lost the signal in the temperature range from 125 to 250 °C. At higher temperatures, however, the thermoluminescence signal was still recorded. After a 38 day measurement delay, 45% of the accumulated carriers in the energy traps were lost.

### Example 5

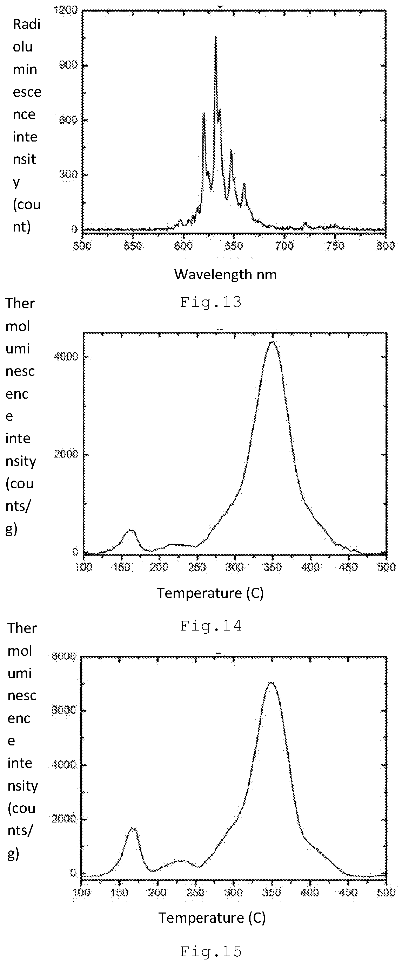

An X-ray memory according to the present invention constituted a matrix with lutetium trioxide Lu₂O₃ activated with an admixture of praseodymium at a concentration of 0.05% counted in relation to lutetium atoms as well as a co-admixture of niobium at a concentration of 0.05% also in relation to lutetium. The above material was produced using the following method: 1.989 g lutetium nitrate, Lu(NO₃)₃*5H₂O, 0.00096 g praseodymium nitrate, Pr(NO₃)₃*6H₂O, 0.0059g niobium chloride, NbCl₅, 1.3 ml ethylene glycol, C₂H₆O₂ and 13 ml citric acid, C₆H₈O₇ are carefully mixed and heated. The resulting resin was combusted in a furnace at a temperature of 600°C for 5 hours in air. The resulting powder was compacted under a press at high pressure making the end product a ceramic sinter. Next, the material was placed in a furnace and heated at a temperature of about 1700°C in in a vacuum. The sample was maintained at that temperature until it cooled to a temperature no greater than 300°C. After cooling, the luminophore was removed from the furnace. The resulting product was a sinter. Figure 13 shows the emission spectrum as a result of excitation with X-ray radiation. The resulting spectrum was identical to spectra recorded at RT for the remaining samples. We observed the characteristic, red luminescence of Pr³⁺. Figure 14 shows a glow curve recorded following exposure to X-ray radiation, recorded in a temperature range from 25 to 500°C. The thermoluminescence was intensive and appeared at particular temperature ranges: (i) 125 - 175°C, (ii) 175 - 250°C as well as (iii) 250 - 450°C. The most intensive band of TL was observed at a temperature of 350 °C.

### Example 6

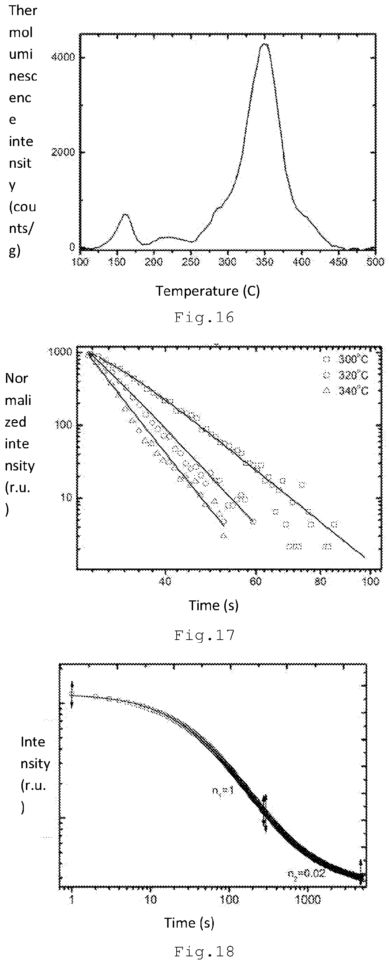

An X-ray memory according to the present invention constituted a matrix with lutetium trioxide Lu₂O₃ activated with an admixture of praseodymium at a concentration of 0.05% counted in relation to lutetium atoms as well as a co-admixture of niobium at a concentration of 0.05% also in relation to lutetium. The above material was produced using the following method: 1.989 g lutetium nitrate, Lu(NO₃)₃*5H₂O, 0.00096 g praseodymium nitrate, Pr(NO₃)₃*6H₂O, 0.0059g niobium chloride, NbCl₅, 1.3 ml ethylene glycol, C₂H₆O₂ and 13 ml citric acid, C₆H₈O₇ are carefully mixed and heated. The resulting resin was combusted in a furnace at a temperature of 600°C for 5 hours in air. The resulting powder was compacted under a press at high pressure making the end product a ceramic sinter. Next, the material was placed in a furnace and heated at a temperature of about 1700°C in atmospheric air. The sample was maintained at that temperature until it cooled to a temperature no greater than 300°C. After cooling, the luminophore was removed from the furnace. The resulting product was a sinter. Figure 15 shows a glow curve recorded following exposure to X-ray radiation, whereas Figure 16 shows a glow curve for the same sample recorded following exposure to ultraviolet radiation (254 nm). Both the glow curves are very similar in structure, but the TL curve following exposure to X-rays was more intensive, which is related to the longer exposure time. Figure 17 shows how the intensity of the red emission of Pr3+ ions drops off over time, when the temperature of the material is maintained at a steady level of 300, 320 and 340°C. When the ratio is shown on a logarithmic scale, it is very nearly linear. More accurately, the dependence of log(I) on log(t) can be described by the equation I = I₀×(1 + γt)⁻ⁿ, in which the parameters n and γ are 5.7; 7.5; 8.5 and 6×10^{-12.} 1×10^{-14.} 1×10⁻¹⁵ respectively, at a temperature of 300, 320 and 340°C. Figure 18 shows the extinction of the intensity of Pr³⁺ emission during constant stimulation with radiation at a wavelength of 400 nm, recorded for samples previously exposed to X-ray radiation. For the set of acquired points, we fitted a curve described by the function I = I₀×(1 + γt)⁻ⁿ. We obtained the following n parameter values n: 1 as well as 0.02.

### Example 7

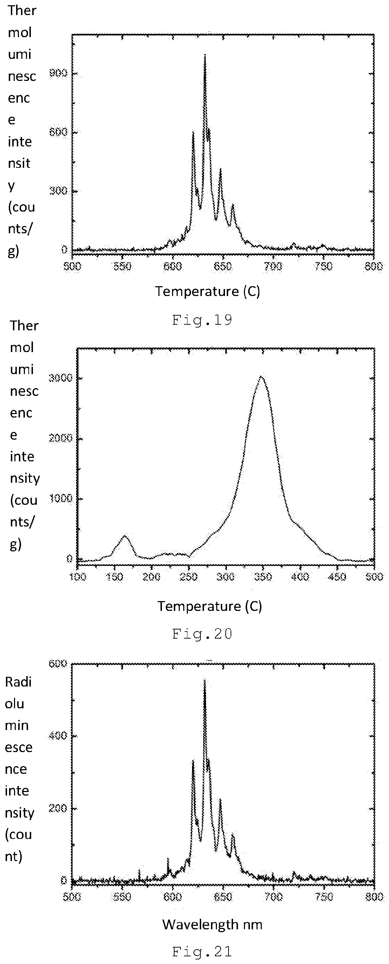

An X-ray memory according to the present invention constituted a matrix with lutetium trioxide Lu₂O₃ activated with an admixture of praseodymium at a concentration of 0.05% counted in relation to lutetium atoms as well as a co-admixture of niobium at a concentration of 0.05% also in relation to lutetium. The above material was produced using the following method: 1.989 g lutetium nitrate, Lu(NO₃)₃*5H₂O, 0.00096 g praseodymium nitrate, Pr(NO₃)₃*6H₂O, 0.0059g niobium chloride, NbCl5, 1.3 ml ethylene glycol, C₂H₆O₂ and 13 ml citric acid, C₆H₈O₇ are carefully mixed and heated. The resulting resin was combusted in a furnace at a temperature of 600°C for 5 hours in air. The resulting powder was compacted under a press at high pressure making the end product a ceramic sinter. Next, the material was placed in a furnace and heated at a temperature of about 1700°C in a nitrogen atmosphere. The sample was maintained at that temperature until it cooled to a temperature no greater than 300°C. After cooling, the luminophore was removed from the furnace. The resulting product was a sinter. Figure 19 shows a luminescence spectrum recorded during the excitation of the material with X-ray radiation. The resulting spectrum corresponds to for the red emission of Pr³⁺. The emission band stretched over the range from 590 - 700 nm and corresponds to a ¹D₂-³H₄ transfer of Pr³⁺. At longer wavelengths in the range from 710 - 775 nm we observed markedly less intensive bands, corresponding to ¹D₂-³H₅ transfers. Figure 20 shows a glow curve recorded following exposure to X-ray radiation, recorded in a temperature range from 25 to 500°C. The thermoluminescence was intensive and appeared at particular temperature ranges: (i) 125 - 175°C, (ii) 200 - 250°C as well as (iii) 250 - 450°C. The most intensive thermoluminescence was observed at a temperature of 350 °C.

### Example 8

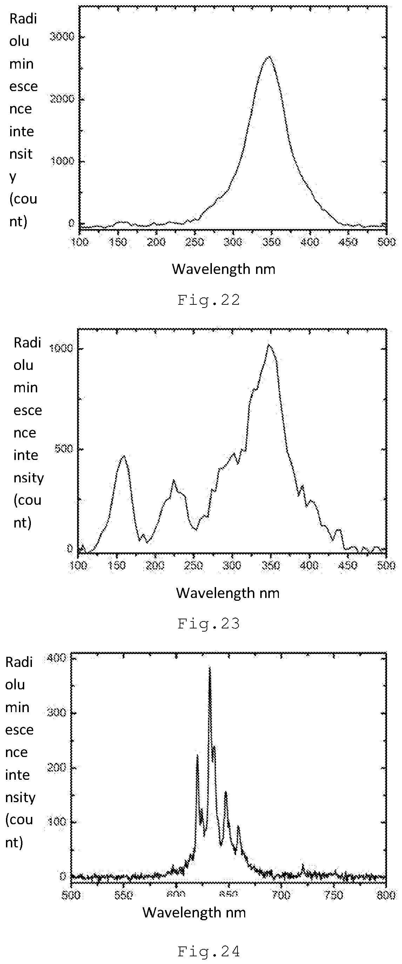

An X-ray memory according to the present invention constituted a matrix with lutetium trioxide Lu₂O₃ activated with an admixture of praseodymium at a concentration of 0.05% counted in relation to lutetium atoms as well as a co-admixture of niobium at a concentration of 0.2% also in relation to lutetium. The above material was produced using the following method: 1.995 g lutetium nitrate, Lu(NO₃)₃*5H₂O, 0.00096 g praseodymium nitrate, Pr(NO₃)₃*6H₂O, 0.00239g niobium chloride, NbCl₅, 1.3 ml ethylene glycol, C₂H₆O₂ and 13 ml citric acid, C₆H₈O₇ are carefully mixed and heated. The resulting resin was combusted in a furnace at a temperature of 600°C for 5 hours in air. The resulting powder was compacted under a press at high pressure making the end product a ceramic sinter. Next, the material was placed in a furnace and heated at a temperature of about 1700°C in a reducing atmosphere, a mixture of nitrogen and hydrogen, at a volume ratio of 3:1. The sample was maintained at that temperature until it cooled to a temperature no greater than 300°C. After cooling, the luminophore was removed from the furnace. The resulting product was a sinter. Figure 21 shows a luminescence spectrum recorded during the excitation of the material with X-ray radiation. The resulting spectrum was characteristic for the red emission of Pr³⁺. The emission band spans the range from 590 - 700 nm and corresponds to a ¹D₂-³H₄ transfer of Pr³⁺. At longer wavelengths in the range from 710 - 775 nm we observed significantly less intensive bands, corresponding to ¹D₂-³H₅ transfers. Figure 22 shows a glow curve recorded following exposure to X-ray radiation, recorded in a temperature range from 25 to 500°C. Thermoluminescence appeared at particular temperature ranges: (i) 125 - 175°C, (ii) 200 - 250°C as well as (iii) 250 - 450°C, wherein in the first two it was relatively weak. The most intensive thermoluminescence was observed at a temperature of 350 °C.

### Example 9

An X-ray memory according to the present invention constituted a matrix with lutetium trioxide Lu₂O₃ activated with an admixture of praseodymium at a concentration of 0.05% counted in relation to lutetium atoms as well as a co-admixture of niobium at a concentration of 0.05% also in relation to lutetium. The above material was produced using the following method: 1.989 g lutetium nitrate, Lu(NO₃)₃*5H₂O, 0.00096 g praseodymium nitrate, Pr(NO₃)₃*6H₂O, 0.0059g niobium chloride, NbCl₅, 1.3 ml ethylene glycol, C₂H₆O₂ and 13 ml citric acid, C₆H₈O₇ are carefully mixed and heated. The resulting resin was combusted in a furnace at a temperature of 600°C for 5 hours in air. The resulting powder was compacted under a press at high pressure making the end product a ceramic sinter. Next, the material was placed in a furnace and heated at a temperature of about 1200°C in air. The sample was maintained at that temperature until it cooled to a temperature no greater than 300°C. After cooling, the luminophore was removed from the furnace. The resulting product was a sinter. Figure 23 shows a glow curve recorded following exposure to X-ray radiation, recorded in a temperature range from 25 to 500°C. Thermoluminescence appeared at particular temperature ranges: (i) 125 - 175°C, (ii) 200 - 250°C as well as (iii) 250 - 450°C. The most intensive thermoluminescence was observed at a temperature of 350 °C. However, it should be stressed that heating to 1200°C caused the TL intensity to be weak.

### Example 10

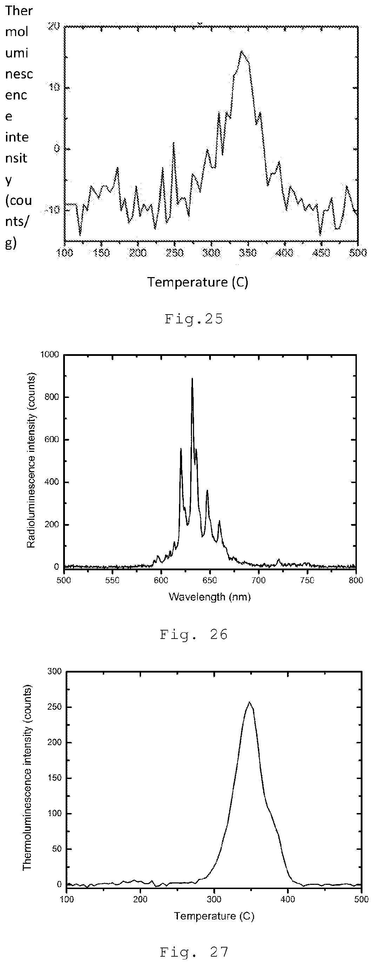

An X-ray memory according to the present invention constituted a matrix with lutetium trioxide Lu₂O₃ activated with an admixture of praseodymium at a concentration of 0.2% counted in relation to lutetium atoms as well as a co-admixture of niobium at a concentration of 0.1% also in relation to lutetium. The above material was produced using the following method: 1.994 g lutetium nitrate, Lu(NO₃)₃*5H₂O, 0.00386 g praseodymium nitrate, Pr(NO₃)₃*6H₂O, 0.00119g niobium chloride, NbCl₅, 1.3 ml ethylene glycol, C₂H₆O₂ and 13 ml citric acid, C₆H₈O₇ are carefully mixed and heated. The resulting resin was combusted in a furnace at a temperature of 600°C for 5 hours in air. The resulting powder was compacted under a press at high pressure making the end product a ceramic sinter. Next, the material was placed in a furnace and heated at a temperature of about 1700°C in air. The sample was maintained at that temperature until it cooled to a temperature no greater than 300°C. After cooling, the luminophore was removed from the furnace. The resulting product was a sinter. Figure 24 shows a luminescence spectrum recorded during the excitation of the material with X-ray radiation. The resulting spectrum was characteristic for the red emission of Pr³⁺. The emission band stretched over the range from 590 - 700 nm and corresponds to the transfer ¹D₂-³H₄ of Pr³⁺. At higher wavelengths, in the range from 710 - 775 nm we observed bands of low intensity, corresponding to the transfer ¹D₂-³H₅. Figure 25 shows a glow curve recorded following exposure to X-ray radiation, recorded in a temperature range from 25 to 500°C. The thermoluminescence was of very low intensity. Following exposure to X-ray radiation we managed to record one TL band in a temperature range from 250 to 450°C. The high Pr and Nb concentrations did not favour efficient thermoluminescence.

### EXAMPLE 11

An X-ray memory according to the present invention constituted a matrix with lutetium trioxide Lu₂O₃ activated with an admixture of praseodymium at a concentration of 0.05% counted in relation to lutetium atoms as well as a co-admixture of titanium at a concentration of 0.015% also in relation to lutetium. The above material was produced using the following method: 1.9987 g lutetium nitrate, Lu(NO₃)₃*5H₂O, 0.00096 g praseodymium nitrate, Pr (NO₃)₃*6H₂O, 0.2 µl of 1% solution of titanium isopropoxide, Ti([OCH(CH₃)₂]₄, in 2 M citric acid, 1.3 ml ethylene glycol, C₂H₆O₂, and 13 ml 2 M citric acid, C₆H₈O₇ are carefully mixed and heated. The resulting resin was combusted in a furnace at a temperature of 700°C for 5 hours in air. The resulting powder was compacted under a high pressure. Next, the material was placed in a furnace and heated at a temperature of about 1700°C in air. The sample was maintained at that temperature until it cooled to a temperature no greater than 300°C. After cooling, the luminophore was removed from the furnace. The resulting product was a sintered ceramic. Figure 26 shows a luminescence spectrum recorded during the excitation of the material with X-ray radiation. The resulting spectrum was characteristic for the red emission of Pr³⁺. The emission band stretched over the range from 590 - 700 nm and corresponds to the transfer ¹D₂-³H₄ of Pr³⁺. At higher wavelengths, in the range from 710 - 775 nm we observed bands of low intensity, corresponding to the ¹D₂-³H₅ transfer. Figure 27 shows a glow curve recorded following exposure to X-ray radiation, recorded in a temperature range from 25 to 500°C. The thermoluminescence was of high intensity. The TL band appeared in a temperature range from 270 to 430°C with a peak at about 355 °C.

### EXAMPLE 12

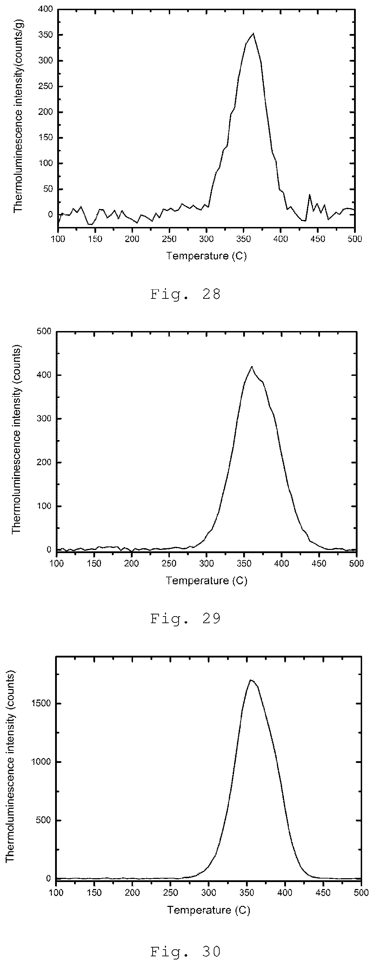

An X-ray memory according to the present invention constituted a matrix with lutetium trioxide Lu₂O₃ activated with an admixture of praseodymium at a concentration of 0.05% counted in relation to lutetium atoms as well as a co-admixture of titanium at a concentration of 0.1% also in relation to lutetium. The above material was produced using the following method: 1.997 g lutetium nitrate, Lu(NO₃)₃*5H₂O, 0.00096 g praseodymium nitrate, Pr(NO₃)₃*6H₂O, 1.3 µl of 1% solution of titanium isopropoxide, Ti([OCH(CH₃)₂]₄, in 2 M citric acid, 1.3 ml ethylene glycol, C₂H₆O₂ and 13 ml 2 M citric acid, C₆H₈O₇ are carefully mixed and heated. The resulting resin was combusted in a furnace at a temperature of 700°C for 5 hours in air. The resulting powder was compacted under a high pressure. Next, the material was placed in a furnace and heated at a temperature of about 1700°C in a mixture of nitrogen and hydrogen at a volume ratio of 3:1. The sample was maintained at that temperature until it cooled to a temperature no greater than 300°C. After cooling, the luminophore was removed from the furnace. The resulting product was a sintered ceramic. Figure 28 shows a glow curve recorded following exposure to X-ray radiation, recorded in a temperature range from 25 to 500°C. The thermoluminescence was of high intensity. The TL band appeared in a temperature range from 270 to 430°C with a peak at about 355 °C.

### EXAMPLE 13

An X-ray memory according to the present invention constituted a matrix with lutetium trioxide Lu₂O₃ activated with an admixture of praseodymium at a concentration of 0.1% counted in relation to lutetium atoms as well as a co-admixture of titanium at a concentration of 0.015% also in relation to lutetium. The above material was produced using the following method: 1.9977 g lutetium nitrate, Lu(NO₃)₃*5H₂O, 0.00193 g praseodymium nitrate, Pr(NO₃)₃*6H₂O, 0.2 µl of 1% solution of titanium isopropoxide, Ti([OCH(CH₃)₂]₄, in 2 M citric acid, 1.3 ml ethylene glycol, C₂H₆O₂ and 13 ml 2 M citric acid, C₆H₈O₇, are carefully mixed and heated. The resulting resin was combusted in a furnace at a temperature of 700°C for 5 hours in air. The resulting powder was compacted under a high pressure. Next, the material was placed in a furnace and heated at a temperature of about 1700°C in a mixture of nitrogen and hydrogen at a volume ratio of 3:1. The sample was maintained at that temperature until it cooled to a temperature no greater than 300°C. After cooling, the luminophore was removed from the furnace. The resulting product was a sintered ceramic. Figure 29 shows a glow curve recorded following exposure to X-ray radiation, recorded in a temperature range from 25 to 500°C. The thermoluminescence was of high intensity. The TL band appeared in a temperature range from 270 to 430°C with a peak at about 355 °C.

### EXAMPLE 14

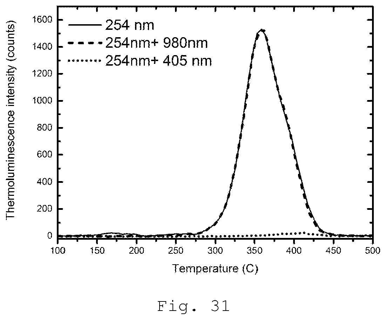

An X-ray memory according to the present invention constituted a matrix with lutetium trioxide Lu₂O₃ activated with an admixture of praseodymium at a concentration of 0.05% counted in relation to lutetium atoms as well as a co-admixture of titanium at a concentration of 0.007% also in relation to lutetium. The above material was produced using the following method: 1.99886 g lutetium nitrate, Lu(NO₃)₃*5H₂O, 0.00096 g praseodymium nitrate, Pr(NO₃)₃*6H₂O, 0.09 µl of 1% solution of titanium isopropoxide, Ti([OCH(CH₃)₂]₄, in 2 M citric acid, 1.3 ml ethylene glycol, C₂H₆O₂ and 13 ml 2 M citric acid, C₆H₈O₇, are carefully mixed and heated. The resulting resin was combusted in a furnace at a temperature of 700°C for 5 hours in air. The resulting powder was compacted under a high pressure. Next, the material was placed in a furnace and heated at a temperature of about 1700°C in a mixture of nitrogen and hydrogen at a volume ratio of 3:1. The sample was maintained at that temperature until it cooled to a temperature no greater than 300°C. After cooling, the luminophore was removed from the furnace. The resulting product was a sintered ceramic. Figure 30 shows a glow curve recorded following exposure to X-ray radiation, recorded in a temperature range from 25 to 500°C. The thermoluminescence was of high intensity. The TL band appeared in a temperature range from 270 to 430°C with a peak at about 355 °C. Fig. 31 shows three TL glow curves of a prepared in a mixture of nitrogen and hydrogen at a volume ratio of 3:1 ceramic sample of Lu₂O₃:0.05%Pr;0.007%Ti freshly irradiated with X-rays and further stimulated with 980 nm infrared photons and with 405 nm radiation afterwards. The 980 nm radiation contains too little energy to remove the trapped carriers responsible for the main glow peak around 355 °C. The violet radiation of 405 nm emptied the traps totally producing the red luminescence of Pr³⁺.

## Claims

1. An X-ray memory **characterised in that** it contains a matrix of lutetium trioxide Lu₂O₃ doped with praseodymium and niobium or titanium.

2. A memory according to Claim 1 **characterised in that** the content of praseodymium, in atomic percent in relation to lutetium, is from 0.01% to 0.2%.

3. A memory according to Claim 1 or 2 **characterised in that** the content of niobium, in atomic percent in relation to lutetium, is from 0.01% to 0.5%.

4. A memory according to Claim 1 or 2 **characterised in that** the content of titanium, in atomic percent in relation to lutetium, is from 0.007 % to 0.1 %.

5. The use of a memory defined in any of Claims from 1 to 4 to secure sensitive documents and/or in the production of an X-ray memory in medical diagnostics, in the production of a visible light source, in the production of infrared laser indicators, or for dosimetric uses.

## Patentansprüche

1. Ein Röntgen-Speicherleuchtstoffkörper, **dadurch gekennzeichnet, dass** es eine Matrix aus Lutetium(III)-oxid Lu₂O₃ enthält, die mit Praseodym und Niob oder Titan dotiert ist.

2. Ein Speicherleuchtstoffkörper nach Anspruch 1, **dadurch gekennzeichnet, dass** der Gehalt an Praseodym in Atomprozent in Bezug auf Lutetium von 0.01% bis 0.2% beträgt

3. Ein Speicherleuchtstoffkörper nach Anspruch 1 oder 2, **dadurch gekennzeichnet, dass** der Gehalt an Niob in Atomprozent in Bezug auf Lutetium von 0.01% bis 0.5% beträgt.

4. Ein Speicherleuchtstoffkörper nach Anspruch 1 oder 2, **dadurch gekennzeichnet, dass** der Gehalt an Titan in Atomprozent in Bezug auf Lutetium von 0.007% bis 0.1% beträgt

5. Die Verwendung des Speicherleuchtstoffkörpers nach Anspruch 1 bis 4 zur Sicherung empfindlicher Dokumente und/oder bei der Herstellung von Röntgen-Speicherleuchtstoffkörpern für medizinische Diagnostik, bei der Herstellung von Quellen sichtbaren Lichts, bei der Herstellung von Infrarotlaser-Indikatoren, oder für dosimetrische Anwendungen.

## Revendications

1. Une mémoire à rayons X **caractérisée en ce qu'**elle contient une matrice de trioxyde de lutécium Lu₂O₃ dopée par du praséodyme et du niobium ou du titane.

2. La mémoire selon la revendication 1 **caractérisée en ce que** la teneur en praséodyme, en pourcentage atomique par rapport au lutécium, est de 0,01% à 0,2%.

3. La mémoire selon la revendication 1 ou 2 **caractérisée en ce que** la teneur en niobium, en pourcentage atomique par rapport au lutécium, est de 0,01% à 0,5%.

4. La mémoire selon la revendication 1 ou 2 **caractérisée en ce que** la teneur en titane, en pourcentage atomique par rapport au lutécium, est de 0,007% à 0,1%.

5. Utilisation de la mémoire définie dans l'une quelconque des revendications 1 à 4 pour sécuriser des documents sensibles et/ou dans la production d'une mémoire à rayons X dans le diagnostic médical, dans la production d'une source lumineuse visible, dans la production d'indicateurs laser infrarouges, ou pour des applications dosimétriques.
